# EUROPEAN PATENT SPECIFICATION

(11) **EP 0 502 639 B1**
(45) Date of publication and mention of the grant of the patent: **17.04.1996**
(21) Application number: 92301487.2
(22) Date of filing: 21.02.1992
(51) Int. Cl.: B65G 17/08, B65G 17/06

(54) **Replaceable snap-on modular overlay for rod and link turn-curve conveyor belts**
Modulare, mittels Schnappverriegelung auswechselbare Auflage für Umlenk-Kurven Förderbänder vom Gliederbandtyp mit parallelen Stangen
Revêtement modulaire remplaçable par encliquetage pour transporteurs à bande à renvoi-courbe du type à tiges et maillons

(30) Priority: 22.02.1991 US 658638; 11.02.1992 US 833658
(43) Date of publication of application: 09.09.1992
(73) Proprietor: ASHWORTH BROS. INC., Fall River Massachusetts 02724 (US)
(72) Inventor: Roinstad, Gerald C., Williamsburg, Virginia 23816 (US); Straight, Michael R., Jefferson, Louisiana 70121 (US); Kucharski, John G., Winchester, Virginia 22601 (US)
(74) Representative: Adkins, Michael

(56) References cited:
- EP-A- 0 095 933
- EP-A- 0 201 317
- EP-A- 0 254 604
- GB-A- 1 577 940

## Description

### FIELD OF THE INVENTION

This invention relates to conveyor belts and, more particularly, to ware-supporting attachments releasably attached to and extending between spaced rod members which extend transversely of the direction of travel of a collapsible-link conveyor belt and a method of assembly and retention of the individual attachments to the conveyor belt. The ware-supporting attachments impart only minimal tensile loads to the supported ware and moreover do not allow ware of small size to become trapped in the attachment.

### BACKGROUND OF THE INVENTION

Conveyor apparatus are widely used in a great variety of industrial fields as part of automated machinery for transporting products or work pieces from one location to another automatically and repetitively with minimal operator control or observation. It is thus important that the conveyor construction be durable and reliable, and if damaged, easily and quickly repairable with readily available parts. Such conveyors in the past have employed chains or collapsible rod and link conveyor belts to which individual ware-supporting attachments are attached. The collapsible rod and link conveyor belt has a conveying surface of open-frame construction formed by spaced rods in generally parallel relationship and extending transversely to the direction of motion of the belt. Typically, the rods are interconnected by two parallel rows of links at the extreme edges of the belt and thus at the opposite ends of the rods.

The present invention is particularly adapted for use in such collapsible rod and link conveyor belts. An example of such a conveyor belt is shown in U.S. Patent No. 3,225,898 to Gerald C. Roinestad, entitled "Collapsible Conveyor Belt." The conveyor belt of the Roinestad Patent 3,225,898 includes a supporting surface comprising a plurality of transverse rods and a link construction which enables the conveyor belt to travel through an edgewise arcuate path in the plane of the belt as well as an arcuate path about an axis parallel to the plane of the belt. Chain conveyors typically do not lend themselves to situations requiring the conveyor belt to travel through an edgewise arcuate path in the plane of the belt, for example, a long helical path which requires the inner portion of the belt to collapse upon itself and/or the outer portion of the belt to expand as the belt travels such a path.

Numerous attachments have been used on conveyor apparatus to provide a supporting surface for the wares carried thereon. Non-collapsing attachments are disclosed for conveyors utilizing rods in U.S. Patent Nos. 1,376,449 (grated support surface); 3,799,328 (grated support surface); 3,977,514 (continuous support surface); and 4,469,221 (grated support surface); and for conveyors utilizing chains in U.S. Patent No. 4,582,193 (continuous support surface). Collapsing attachments are disclosed for collapsible rod and link-type conveyors in U.S. Patent Nos. Re. 27,690 (grated support surface); 2,872,023 (grated support surface); 3,261,451 (grated support surface); 3,333,678 (continuous support surface); 3,416,645 (continuous support surface); and 4,394,901 (continuous support surface).

The prior art attachments which provide a collapsible continuous support surface disclose attachments which meet one another along lines generally perpendicular to the direction of relative motion between collapsing attachments when travelling the straight portion of the conveyor. Subsequent expansion and collapsing of the various portions of the respective attachments relative to one another when the conveyor belt travels through an edgewise arcuate path in the plane of the belt imparts tensile forces across a similar line in an article resting upon at least two of such attachments. If the article is pliable or lacks sufficient cohesive strength, for example, a hamburger pattie, undesirable distortion or disassociation of the article may occur resulting in a non-acceptable product for market. Such attachments are considered herein to be tensioning attachments.

The prior art attachments which provide a collapsible grated support noted above are all of a flattened helix of wire. In such conveyor systems, when the belt collapses, the loops of one helix nest between the loops of the next helix. Subsequent expansion of two collapsed attachments under a common article imparts a series of minute shear forces across the article. The likelihood of distortion in the article is less as compared with prior art attachments providing a collapsible continuous support surface. Such attachments are considered herein to be non-tensioning attachments.

Problems associated with the use of flat helical mesh woven onto collapsible rod and link conveyor belts (grid belts) frequently have centered upon the inherent existence of a cavity or hole within each helix, formed by the opposing flat faces of the helix and the connective members extending through the end portions of such flat helixes. In belt structures having such cavities within the helix, it is possible for a relatively small diameter elongated item, e.g., a green bean or a threaded fastener, to slip into such a cavity and become trapped, thus presenting an unsanitary condition or possibly damaging the belt. One technique for avoiding this problem has been the use of a more tightly wound helix to provide a finer mesh. This approach, however, consumes much greater amounts of wire for a belt of given dimensions and renders such a belt both more costly and heavier than desirable, requiring heavier components to support the belt and more power to operate it.

U.S. Patent No. 3,920,117 issued to Roinestad discloses an attachment which is trap-free as compared to a flat helix, but the attachment is not collapsible. Other trap-free, non-collapsing attachments are disclosed in U.S. Patent Nos. 3,799,328; 4,469,221; and 4,582,193. Though these are trap-free attachments, they are also tensioning attachments.

A further problem associated with the non-tensioning attachments of the prior art is repair and/or replacement of a damaged or broken flat helix wire. Such a repair or replacement is not easily or readily accomplished. Considerable time and effort is required, resulting in an extended down-time period of the conveyor belt. The foregoing problem stems from the requirement that the flat helix wire be installed onto the rods of the belt prior to assembly of the belt in a given system.

Thus, there exists a need to provide a non-tensioning, trap-free ware-support attachment which can be used in conjunction with commercially available collapsible rod and link conveyor belts, and-which is easily attachable and removable from an assembled belt without requiring complete disassembly of the conveyor belt system, the use of special tooling, nor specially skilled labor, while at the same time remaining securely fastened to the rods of the belt while in operation.

British Patent No. 1 577 940 shows a conveyor belt comprising a ladder-type structure formed by a plurality of spaced transverse rods located in spaced relation by longitudinal links. A plurality of load support overlays is provided each comprising an elongated zig-zag member. The overlays provide alternating oppositely opening nestable segments which allow nesting of the overlays in a direction generally perpendicular to the rods. Each overlay hingedly engages one of a pair of rods by means of a slot extending inwardly of the overlay parallel to its load support surface and hingedly engages the other rod by means of a slot extending inwardly of the overlay and perpendicular to the load support surface.

According to the invention there is provided a ware transport overlay for use on a conveyor belt having a plurality of spaced transverse rods, said overlay comprising an elongated zig-zag member forming alternating oppositely opening nestable segments to allow, in use, collapse thereof in a direction generally perpendicular to rods on a belt with similar zig-zag members of overlays immediately ahead and behind said overlay on said belt, said zig-zag member having a lower surface; characterised in that a plurality of downwardly opening snap-on retaining devices is provided on said lower surface and configured to snap said overlay releasably in a vertically downward direction, in use, onto one of said rods of said conveyor belt along each end of the overlay so as to retain said zig-zag member releasably thereto and to orient said zig-zag member substantially longitudinally relative to said rods, a plurality of one group of said snap-on retaining devices being located in lateral alignment along one end of said overlay to releasably retain a first rod, and a plurality of another group of said snap-on retaining devices being oblong and located in lateral alignment along an opposite end of said overlay to releasably retain a second rod.

The zig-zag member may further comprise means for allowing said belt to expand or collapse while the belt travels through an arcuate path in the plane of the belts.

Said zig-zag member may comprise a plurality of laterally spaced substantially longitudinally disposed longitudinal members; a plurality of transversely disposed connecting means each connecting adjacent ones of said longitudinal members, adjacent ones of said connecting means connecting opposite end portions of said longitudinal members so that the longitudinal members and connecting means form a plurality of alternating oppositely opening nestable segments to allow nesting thereof with overlays immediately ahead and behind said overlay on said belt.

The overlays may further comprise a reinforcing means located within each of the segments formed by the connecting means connecting associated pairs of longitudinal members for inhibiting compression or expansion of the overlay in a direction parallel to the first and second rod members to which the overlay is attached. The reinforcing means may be a reinforcing member located within each of the segments formed by the connecting means connecting associated longitudinal members between each corresponding pair of connected longitudinal members for inhibiting compression or expansion of the overlay in a direction parallel to the first and second rod members. Alternatively, the reinforcing member may be connected to and integral to the connecting means and to opposing sides of the associated pair of connected longitudinal members adjacent to the connecting means. In this embodiment, reinforcing member is a solid mass which has a bottom surface defining a portion of the corresponding downwardly directed opening of the first or second support means.

The connecting means would be an apex member or a connecting member. The apex member comprises a direct connection of the opposing end portions of two longitudinal members wherein the segments thereby are angular in shape. Alternatively, connecting means may be a connecting member connected to and imposed between the opposing end portions of two longitudinal members, preferably in parallel orientation relative to the rod members.

Each of said snap-on retaining devices in one group of snap-on retaining devices may include openings which extend longitudinally of the respective longitudinal member and parallel to the plane of the belt so as to allow the belt to expand or collapse while the belt travels through an arcuate path about an axis parallel to the plane of the belt.

The overlays may further comprise a plurality of second rod member retaining means, wherein each of the second rod member retaining means is releasably clippable onto the second rod member by movement normal to the plane of the belt.

Preferably, each of the first rod retaining means has a first jaw means. Furthermore, each of the second rod retaining means preferably has a second jaw means.

The plurality of first jaw means cooperates with the first rod member engaging means to releasably retain the first rod member. Likewise, the plurality of second jaw means cooperates with the second rod member engaging means to releasably retain the second rod member.

The first and second jaw means may comprise jaw parts having mutually inclined surfaces at the entry way of the mouth thereof which assist in positioning the first and second rod member retaining means relative to first and second rod members, respectively, prior to attachment thereto and which cause corresponding jaw parts to be urged apart resiliently to permit rod members to enter into their respective rod member engaging means upon application of downward pressure to the overlay.

In one embodiment of the overlay of the present invention, the overlay has a plurality of the first rod member engaging means with a first rod member retaining means having a first jaw means. The overlay also has a plurality of the second rod member engaging means with a second rod member retaining means having a second jaw means.

In another embodiment of the overlay of the present invention, the reinforcing means of the overlay is a reinforcing member located within each of the segments. The plurality of first rod member retaining means is associated with and corresponds to a first plurality of the segments. The plurality of second rod member retaining means is associated with and corresponds to a second plurality of the segments.

In each of the segments of the first and second plurality of segments, the corresponding first or second jaw means cooperates with an associated pair of first or second rod member engaging means to retain the respective rod member. Each of the first and second jaw means has jaw parts with two jaw members which define a mouth into the downwardly directed openings of the respective pair of rod member engaging means. The first jaw member is connected to the associated connecting means and the second jaw member is connected to the associated reinforcing member. The first and second jaw members of each jaw means are oriented parallel to the plane of the conveyor belt and extend in a direction normal to the axis of the respective rod members (i.e., parallel to the direction of movement of the belt, preferably extending toward each other to define the mouth. On an overlay, the mouths of the first jaw means are axially aligned with each other. Likewise, the mouths of the second jaw means are axially aligned with each other.

As a result, a plurality of these cooperating overlays provides a grated horizontal surface formed by the nesting of the segments of the overlays. Such a surface is non-tensioning and trap-free. The first and second support means of each overlay cooperate with the first and second rod member engaging means, respectively, to secure its corresponding rod member and the longitudinally elongated openings of at least one of the first and second support means, preferably both, of each overlay do not hinder travel of the belt through an arcuate path in the plane of the belt which includes an arcuate path that is helical, through an arcuate path about an axis parallel to the plane of the belt or through a vertical path.

Additionally, the reinforcing member may protrude past the last longitudinal member on either end of the overlay. The length of the protrusion may be varied to assist in positioning the overlays in a staggered position to promote nesting of the segments thereof. The protrusions may be utilized to effect end to end connections of a plurality of overlays in a transverse direction to the belt along a particular pair of rod members. The end connections may be male and female correspondingly.

The longitudinal member, connecting means and optional reinforcing member can be easily severed so as to yield several shorter overlays from a single long overlay module. The bottom surface of the longitudinal, connective and reinforcing members are preferably coplanar to prevent rocking or binding of overlays when traveling the path of the belt having at least one rail.

Accordingly, these and other objects, features, and advantages of the present invention will become apparent to those skilled in the art, from a consideration of the following detailed description of preferred embodiments, wherein reference is made to the figures in the accompanying drawings.

### IN THE DRAWINGS

FIG. 1 is a top view of a conveyor belt of the spaced, transverse rod construction of a conveyor system.

FIG. 2 is a side elevation of the conveyor belt shown in FIG. 1.

FIG. 3 is a perspective view of embodiment of an overlay of the present invention prior to installation.

FIG. 4 is a side sectional view of the overlay of FIG. 3 taken along line 4-4 thereof.

FIGS. 5, 6 and 7 are views similar to FIG. 4 but shown slight modifications.

FIG. 8 is a perspective view of another embodiment of an overlay of the present invention prior to installation.

FIG. 9 is a side sectional view of the overlay of FIG. 8 taken along line 9-9 thereof.

FIGS. 10, 11 and 12 are views similar to FIG. 9 but showing slight modifications.

FIG. 13 is a perspective view another embodiment of an overlay of the present invention prior to installation.

FIG. 14 is a perspective view of another embodiment of an overlay of the present invention prior to installation.

FIG. 15 is a side sectional view of the overlay of FIG. 14 taken along line 15-15 thereof.

FIGS. 16, 17 and 18 are similar views to FIG. 15 but showing slight modifications.

FIG. 19 is a top view of a portion of the conveyor belts shown in FIG. 1 with overlays of FIG. 13 negotiating an arcuate path in the plane of the conveyor belt.

FIG. 20 is a perspective view of another embodiment of an overlay of the present invention prior to installation.

FIG. 21 is a top view of another embodiment of an overlay of the present invention prior to installation.

FIG. 22 is a side sectional view of the overlay of FIG. 21 taken along line 22-22 thereof.

FIG. 23 is a side sectional view of the overlay of FIG. 21 taken along line 23-23 thereof.

FIG. 24 is a side sectional view of the overlay of FIG. 21 taken along line 24-24.

FIG. 25 is a side sectional view of the overlay of FIG. 21 taken along line 25-25 thereof.

FIG. 26 is a bottom view of another embodiment of an overlay of the present invention.

### DETAILED DESCRIPTION OF THE PREFERRED EMBODIMENTS

In referring herein below to the various figures of the drawings, like reference numerals will be utilized to refer to identical parts and features of the devices shown therein.

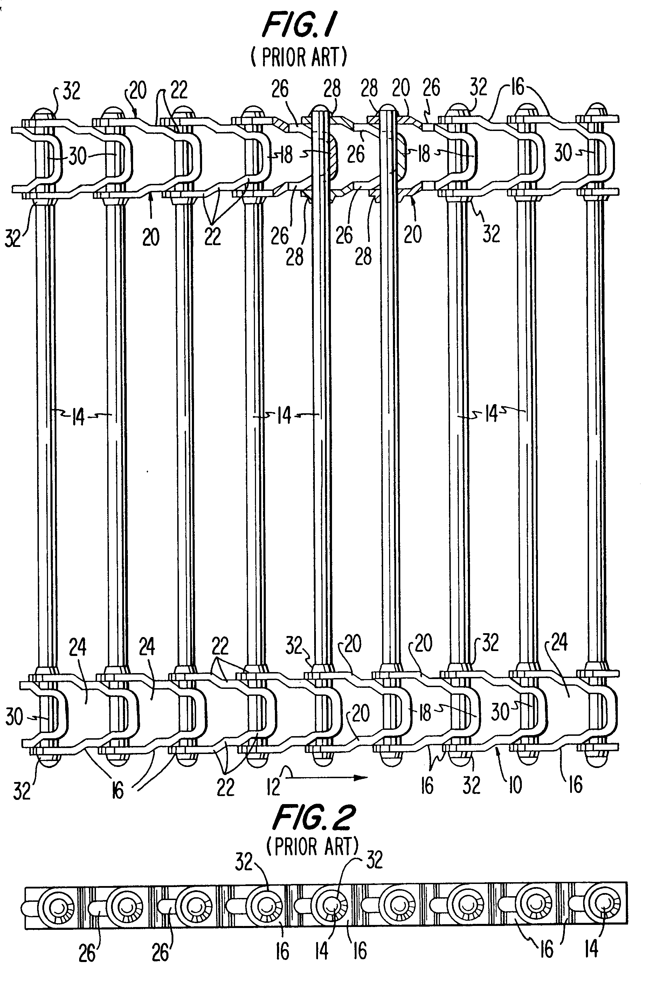

Referring now to the drawings, and more particularly to FIGS. 1 and 2, there is shown by way of illustration, but not of limitation, a conveyor belt 10 of the spaced, transverse rod construction. The conveyor belt 10 depicted is according to U.S. Patent No. 3,325,898 to Roinestad, which is hereby incorporated by reference. As disclosed in pertinent part therein, the conveyor belt 10 includes a plurality of transverse rods 14 shown in FIG. 1 in their normally parallel, equally longitudinally spaced relationship extending transversely to the straight longitudinal direction of motion of the conveyor belt 10, as indicated by the arrow 12 in FIG. 1. For convenience of description, the orientation of the conveyor belt 10 as shown in FIG. 1 will be defined as lying in a horizontal plane and moving in a straight line path therein, although it will be appreciated that the plane of the belt 10 may be inclined at an angle relative to a normally horizontal plane. The rods 14 are slidably and pivotally interconnected at each of their ends by a plurality of generally U-shaped, stepped connecting links 16.

Each of the links 16 includes a straight base portion 18 having a pair of legs 20 rigidly connected to its outer ends. Each of the legs 20 has a plurality of stepped portions 22 to provide a spacing 24 within each of the links 16 which is relatively narrow at the base portion 18 and which becomes progressively wider at the opposite end thereof. The stepped portions 22 of each link are constructed substantially parallel to each other and to the direction of movement of the belt. Each of the links 16 includes, in the legs 20 thereof, a pair of aligned, elongated rod openings 26 adjacent the base 18 and a pair of generally circular, aligned rod openings 28 near their outer ends.

The connecting links 16 are arranged in partially nested or telescoped relationship with the inner, reduced width end 18 of each link 16 received between the wider end of the legs 20 of the respectively next succeeding link 16. Thus, the outer, more widely spaced ends of the legs 20 of each connecting link 16 overlap the base or inner end 18 of the adjoining link so that the rod openings 28 are aligned with the rod openings 26 of the preceding link. A rod 14 is received, at each of its opposite ends, through the aligned openings 26 and 28 of two adjoining links 16 and secured against withdrawal, such as by welding a shoulder 32 at the ends 30 of the rod 14 at each of the circular aligned rod openings 28. The shoulders 32 of each rod 14 secure the underlying leg 20 of its associated link 16 at each end 30 of the rod 14 to maintain the links 16 in fixed, spaced relationship. The rods 14 remain free to slide and to rotate within the slot 26 of the next preceding link 16. The links 16 therefore serve to pivotally and slidably interconnect the rods 14. The openings 24 within each link 16 provide a space between each rod 14 and the base 18 of an adjoining link 16 for receiving sprockets to permit the belt 10 to be driven.

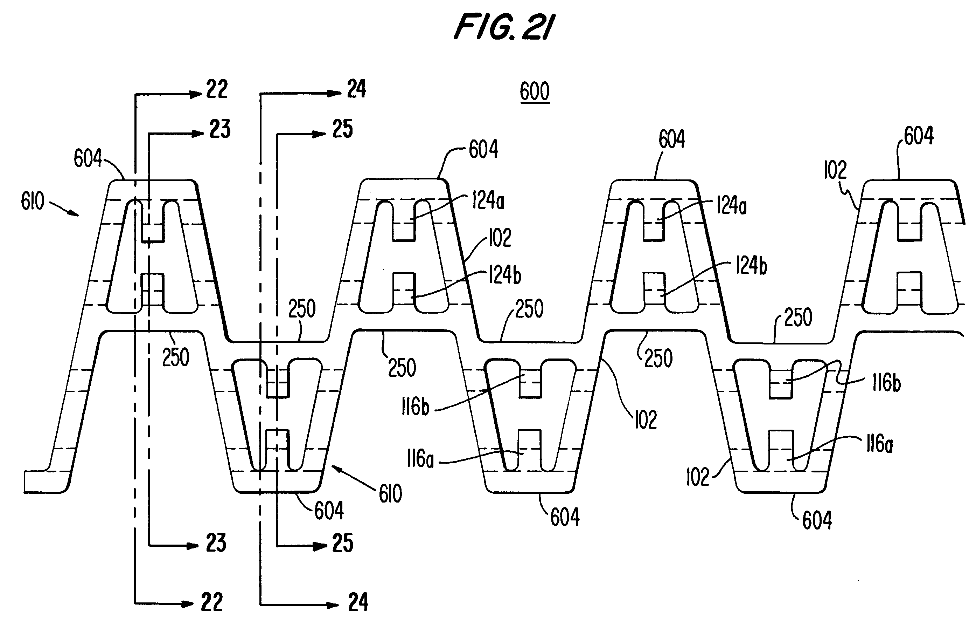

The interconnecting link construction of the belt 10 permits the belt to be driven through an arcuate path in the plane of the belt, for example, as shown in FIG. 19. The arcuate path may also be defined as arcuate about an axis parallel to the plane of the belt 10. The elongated slots 26 permit the links 16 to nest more closely, thereby enabling one edge of the belt 10 to collapse. The rods 14 move from their normally parallel, evenly spaced relationship to an angular or diverging relationship when one edge of the belt 10 is collapsed, as shown in FIG. 19.

It is here again noted that the present invention is not limited to the foregoing type of collapsible rod and link conveyor system. For that member, the overlay of the present invention may be utilized on any conveyor system which utilizes parallel rod construction. The parallel rods may be fixed such that they are not collapsible or they may be interconnected at at least one of their ends to allow only one end to expand or collapse. Alternately, the overlays of the present invention may be utilized on a Small Radius Omni-Grid® belt available from Ashworth Bros., Inc., Winchester, Virginia. In such a belt, there are three rows of links on each of the rod members. The inside and outside links are stepped links such as those described above; however, the outside links are larger because they negotiate a larger radius turn than the inside links through an edgewise arcuate path. This middle link on each rod is a straight sided link with circular holes therethrough to accommodate the rod members and acts as a pivot point for the rod members as the edgewise arcuate paths are negotiated by the belt.

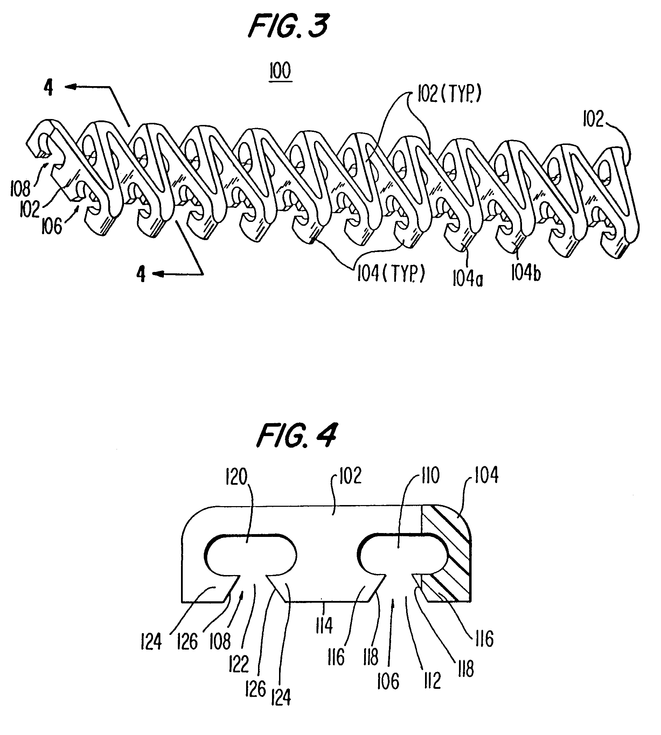

Referring now to FIGS. 3 and 4, there is shown an overlay 100 which is a non-tensioning, trap-free ware-support attachment for a collapsible rod and link conveyor system (not shown) having a belt 10 of spaced rods 14 extending transversely of the direction of travel of the belt 10. The conveyor system is made up of a succession of such overlays 100 for transporting articles. The overlay 100 has a plurality of laterally spaced substantially longitudinally disposed longitudinal members 102 and a plurality of transversely disposed apex members 104. The apex members 104 each are forced by directly connecting the opposing end portions of two longitudinal members 102. Adjacent ones of the apex members 104, for example, apex members 104a and 104b, connect opposite end portions of the associated longitudinal members 102 so that the longitudinal member 102 and apex members 104 form a plurality of alternating oppositely opening nestable segments to allow nesting thereof with overlay 100 immediately ahead and behind this overlay 100 on the conveyor belt 10.

Each longitudinal member 102 has a first support means 106 and a second support means 108 which are opposed and longitudinally spaced from each other. The first support means 106 has a first aperture 110 and a first open access slot 112 extending from the first aperture 110 to the bottom surface 114 of the longitudinal member 102 to permit lateral access to the first aperture 110, thereby forming a first downwardly directed opening for receiving a rod 14. The first support means 106 has a first jaw means having first jaw parts 116 having mutually inclined surfaces 118 at the entry way of the mouth of the first jaw parts 116 and which define the first open access slot 112.

The second support means 108 has a second aperture 120 and a second open access slot 122 extending from the second aperture 120 to the bottom surface 114 of the longitudinal member 102 to permit lateral access to the second aperture 120, thereby forming a second downwardly directed opening for receiving a rod 14. The second support means 108 has a second jaw means having second jaw parts 124 having mutually inclined surface 126 at the entry way of the mouth of the second jaw parts 124 and which define the second open access slot 122.

In this embodiment of the overlay 100, the first aperture 110 and second aperture 120 are elongated slots extending longitudinally of the respective longitudinal member 102 and parallel to the plane of the conveyor belt 10 so as to allow the belt 10 to expand or collapse while the belt 10 travels through an arcuate path about an axis parallel to the plane of the belt 10.

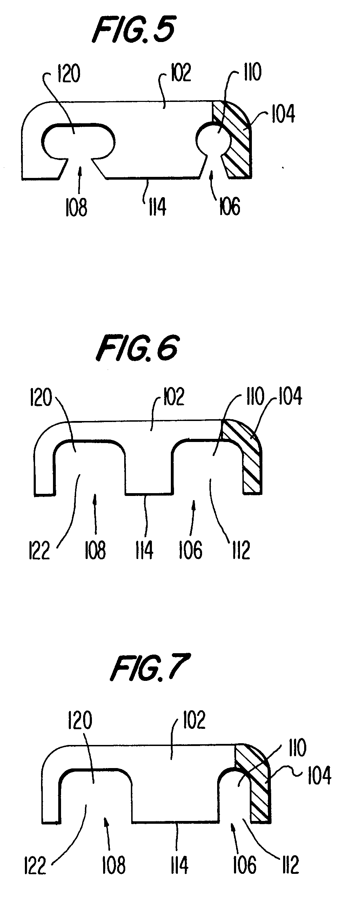

Alternatively, as shown in FIG. 5, the first aperture 110 may be substantially circular, rather than an elongated slot, with a diameter slightly greater than the diameter of rod 14 so that cleanability may be maintained and rod 14 is allowed to rotate freely therein.

In another variation of overlay 100, a plurality of the longitudinal members 102, as shown in FIGS. 4 and 5 have a first jaw parts 116 associated with the first support means 106 and a second jaw parts 124 associated with the second support means 108. Referring now to FIGS. 6 and 7, the remaining longitudinal members 102 would not have jaw parts associated with the first support means 106 and second support means 108 thereof. As shown in FIGS. 6 and 7, each of the remaining longitudinal members 102 would have a first access slot 112 and a second access slot 122 having a longitudinal dimension substantially equal to that of the first aperture 110 and second aperture 120, respectively.

Another modification to overlay of the present invention for example referencing overlay 100 of FIG. 3, the longitudinal members 102 may be progressively larger from one end of the overlay to the other with the first and second apertures 110 and 120, respectively, being positioned and sized on the respective longitudinal members 102 so that the conveyor belt 10 undergoes only longitudinal expansion at the transition point between a straight-line section and an arcuate path section such as a lateral curve or helical path in a manner similar to U.S. Patent No. 4,878,362. In particular, the longitudinal expansion is experienced only at the outer edge of the conveyor belt 10 as the conveyor belt 10 goes through this transition point. The longitudinal dimensions of the first and/or second aperture 110 and 120, respectively, increases elongation from the inner to the outer ends of the conveyor belt 10. As the conveyor belt 10 enters the arcuate path section, the rods 14 are angularly displaced spreading upward just short of the outer most longitudinal surfaces of apertures 110 and 120.

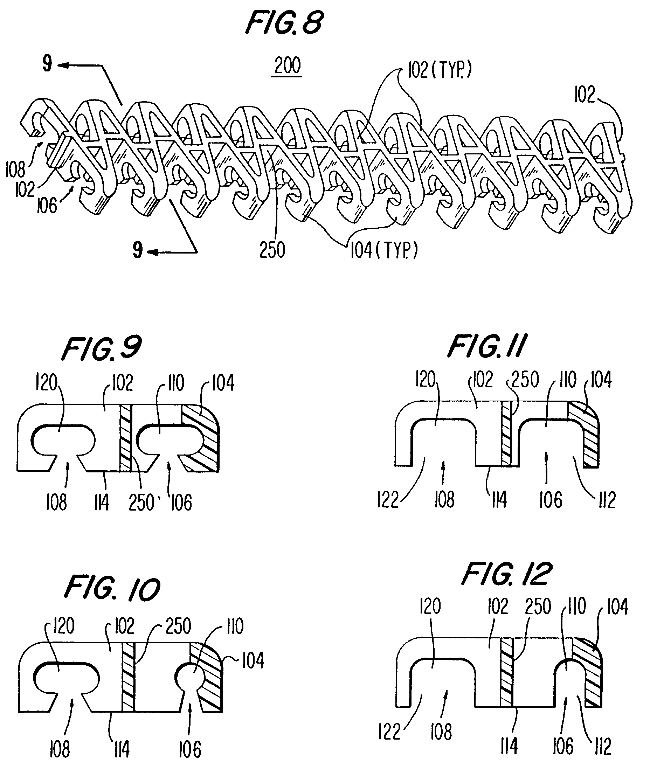

Referring now to FIGS. 8 and 9, there is shown an overlay 200 which is like the overlay 100 shown in FIGS. 3 and 4 in all respects except that overlay 200 also includes a reinforcing member 250. The reinforcing member 250 is substantially parallel to the axis of the rods 14. The ends of each of the reinforcing members 250 are connected to opposing sides of a pair of longitudinal members 102. The reinforcing members 250 are located within the segments formed by a pair of said longitudinal members 102 connected to their corresponding apex member 104. The ends of each of the reinforcing members 250 are connected to the opposing side of its corresponding pair of said longitudinal members 102 at a point intermediate of the first support means 106 and the second support means 108 of the respective longitudinal members 102.

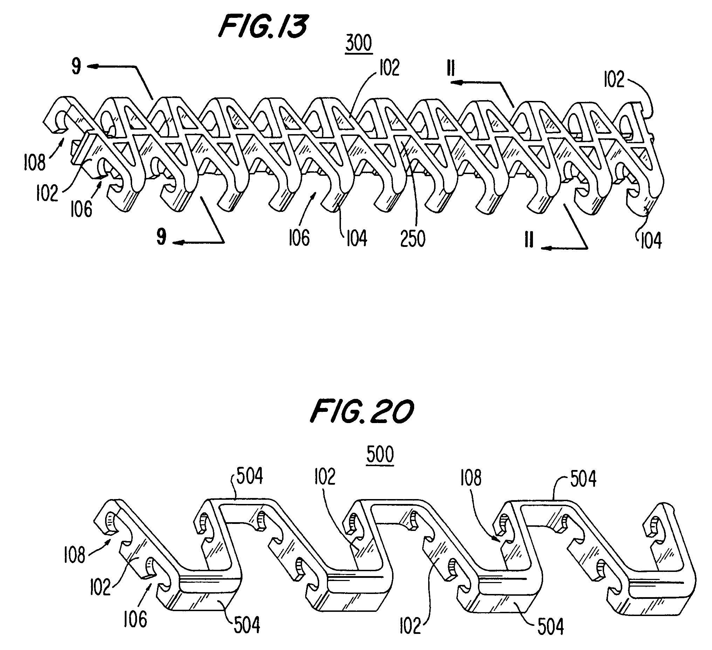

The longitudinal members 102 shown in FIGS. 10, 11 and 12 are like those shown in FIGS. 5, 6 and 7, respectively, in all respects except that the attached reinforcing member 250 is shown. FIG. 13 shows overlay 300 which is like overlay 200 of FIG. 8, but has a combination of a plurality of longitudinal members 102 according to FIG. 9 and a plurality of longitudinal members 102 according to FIG. 11, which do not include jaw parts 116 and 124.

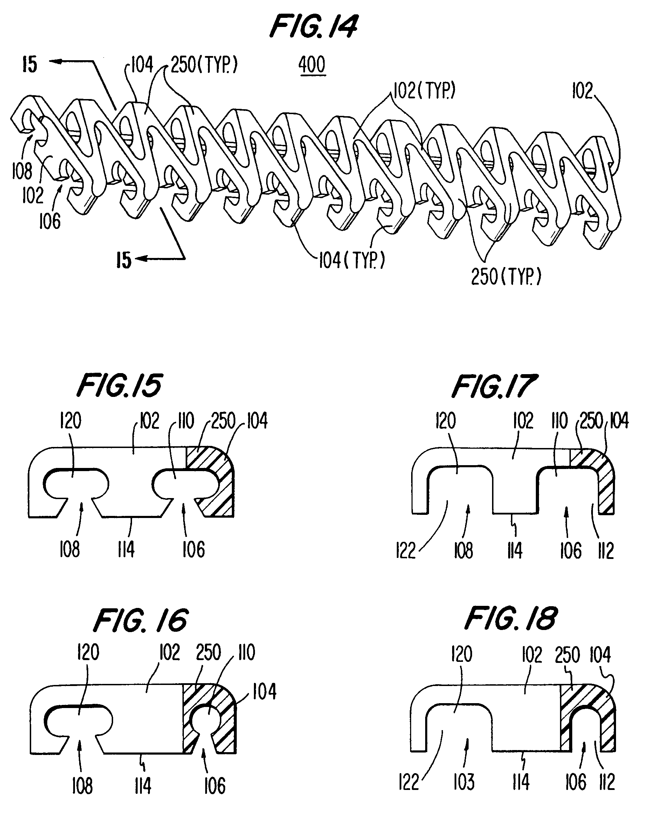

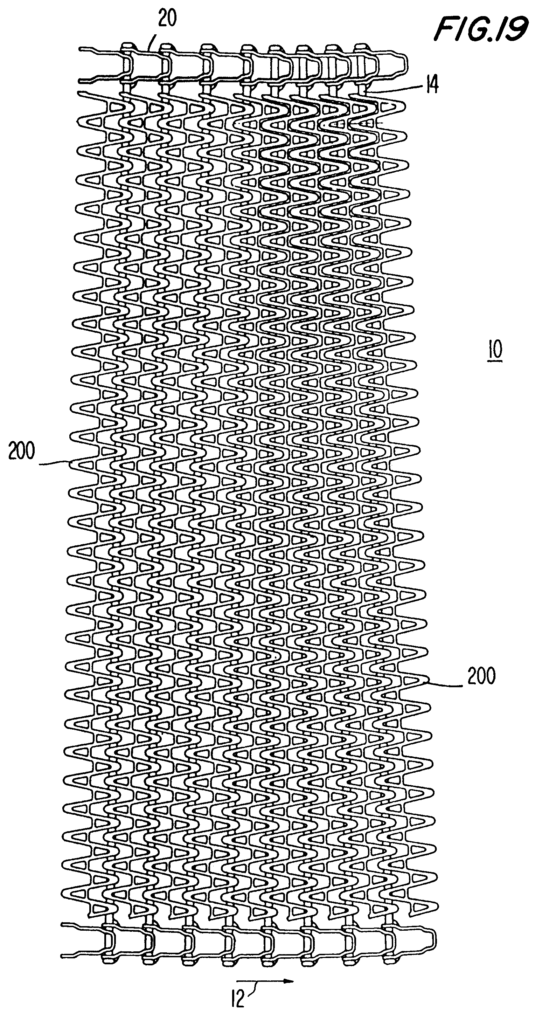

Referring now to FIGS. 14 and 15, there is shown an overlay 400 which is like the overlay 100 shown in FIGS. 3 and 4 in all respects except that overlay 400 also include a reinforcing member 250. The reinforcing member 250 herein is a solid mass. The reinforcing member 250 connects to and is integral to the apex member 104 and the opposing sides of the associated pair of connected longitudinal member 102 wherein the solid mass has a bottom surface which defines a portion of the corresponding aperture 110 or 120. In essence, the reinforcing member 250 constitutes an apex member 104 which has been enlarged by increasing the size thereof thereby filling more of the segment formed by the apex member 104 connecting its associated pair of longitudinal members 102 as is apparent when comparing the longitudinal members 102 shown in FIGS. 4 and 15. Longitudinal members 102 like these shown in FIGS. 5, 6 and 7 having such a reinforcing member 250 are shown in FIGS. 16, 17 and 18, respectively.

Referring now to FIG. 19, there is shown a section of a conveyor belt 10 having a succession of overlays 200, and showing the transition point between a straight-line path and an arcuate path in the plane of the belt 10. The inner edge of the belt 10 shows overlays 200 collapsing on each other.

Referring now to FIG. 20, there is shown an overlay 500 which is like the overlay 100 shown in FIG. 3 in all respects except that overlay 500 has connecting members 504 instead of apex members 104 to connect the opposing end portions of respective pairs of longitudinal members 102. These connecting members 504 are substantially parallel to the main axis of rods 14. Though a conveyor belt 10 made up of a succession of such overlays 500 is non-tensioning, it may not be entirely trap-free.

Referring now to FIG. 21 and FIGS. 22-25, there is shown an overlay 600 which is similar to the overlay 300 shown in FIG. 13 except for the location of the jaw parts and overlay 600 has connecting members 604 instead of apex members 104 to connect the opposing end portions of respective pairs of longitudinal members 102. These connecting members 604 are substantially parallel to the main axis of rods 14. The longitudinal members 102 are generally like those depicted in FIG. 11.

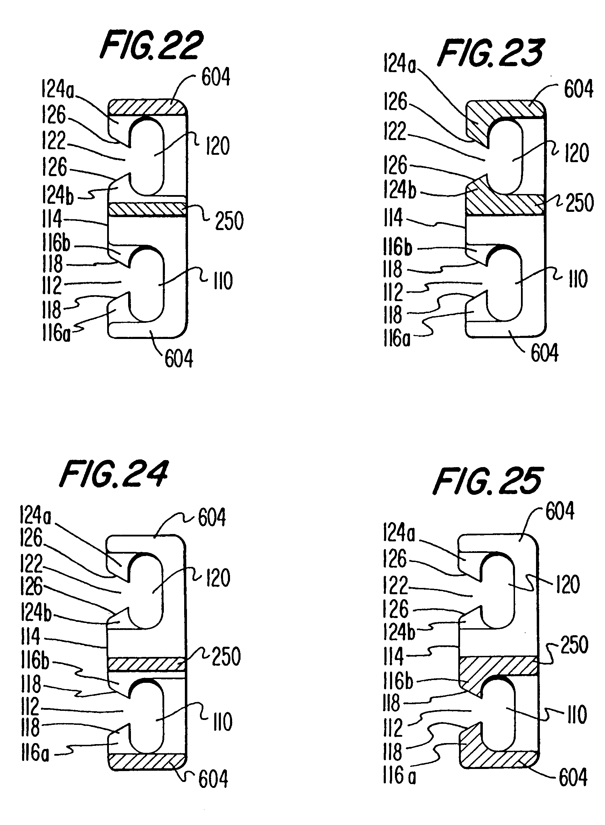

As shown in segment 610 in FIGS. 21 and 25, the first jaw parts has a first jaw member 116a and a second jaw member 116b. The first jaw member 116a is attached to connecting member 604 and extends transversely therefrom toward reinforcing member 250. The second jaw member 116b is attached to reinforcing member 250 and extends transversely therefrom toward connecting member 604. The first and second jaw members 116a and b of the first jaw parts have mutually inclined surfaces 118 at the entry way of the mouth of the first jaw parts and which define the first open access slot 112.

Similarly, in the segment 610 shown in FIGS. 21 and 23, the second jaw parts has a third jaw member 124a and a fourth jaw member 124b. The third jaw member 124a is attached to connecting member 604 and extends transversely therefrom toward reinforcing member 250. The fourth jaw member 124b is attached to reinforcing member 250 and extends transversely therefrom toward connecting member 604. The third and fourth jaw members 124a and b of the second jaw parts have mutually inclined surfaces 126 at the entry way of the mouth of the second jaw parts and which define the second open access slot 122.

In this embodiment of the overlay 600, the first aperture 110 and second aperture 120 are elongated slots extending longitudinally of the respective longitudinal member 102 and parallel to the plane of the conveyor belt 10 so as to allow the belt 10 to extend or collapse while the belt 10 travels through an arcuate path parallel to the plane of the belt 10.

Alternatively, as shown in FIG. 5, the first aperture 110 may be substantially circular, rather than an elongated slot, with a diameter slightly greater than the diameter of rod 14 so that cleanability may be maintained and the rod 14 is allowed to rotate freely therein.

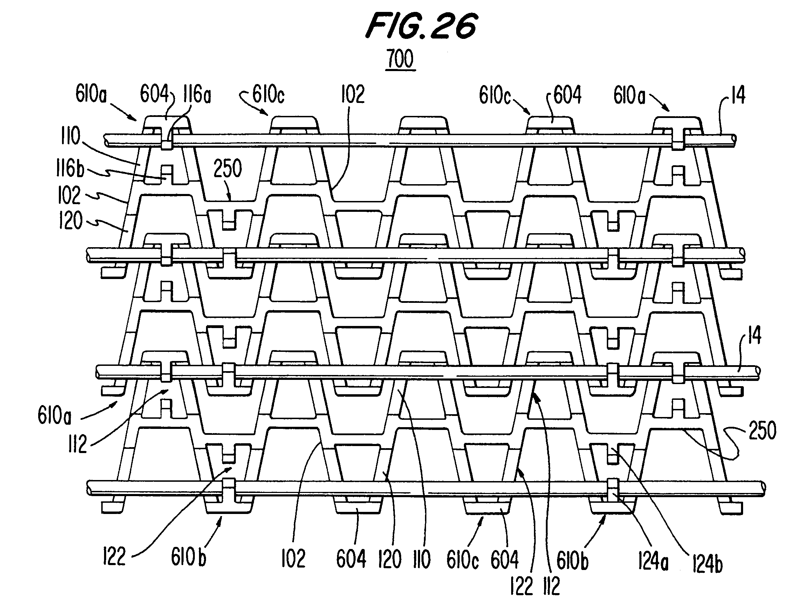

In another variation of overlay 600 shown in FIG. 26, overlay 700 has a first plurality of segments 610a have a first jaw parts having a first and second jaw member 116a and b and a second plurality of segments 610b have a second jaw parts having a third and fourth jaw member 124a and b for releasably clipping onto rods 14. The remaining segments 610c would not have jaw parts associated with the first support means 106 and second support means 108 thereof nor with the connecting member 604 and reinforcing member 250 thereof. Similar to that shown in Figs. 6 and 7, each of the longitudinal members 102 of the remaining segments 610c would have a first access slot 112 and a second access slot 122 having a longitudinal dimension substantially equal to that of the first aperture 110 and second aperture 120, respectively.

As readily apparent from the foregoing, the overlays of the present invention are adapted to be snapped on to two adjacent rods by applying pressure to a top surface of the overlays thereby pushing the jaw parts down onto the rods to snap them resiliently over the rods and held securely but detachably clipped to the rods. The open access slots or throats of the mouths of the respective jaw parts are narrower than the diameters of the rods, but the entries of the mouths are wider to enable the mouth to receive the rods readily for attaching the first and second support means to the rods. The interaction of the mutually inclined surfaces of the flared mouths where the cylindrical surfaces of the rods causes the jaw parts of the respective rod retaining means to be urged apart resiliently to permit the rods to enter into the rod engaging means of the respective first and second support means.

By virtue of the elongated slotted apertures 120 and optionally 110, the belt 10 is adapted to follow a path which is substantially horizontally or transversely curved in the plane of travel of the belt. The belt may travel not only in a circular path but in elliptical, sinuous, helical and many other belt paths. When the belt rounds a curve in the plane of the belt, the elongated slotted apertures allow the belt to expand or collapse in response to traveling through such a curve. In this manner, the belt adjusts itself freely to follow the curved path.

The overlays of the present invention can be molded from plastic into various shapes and sizes as is readily apparent from the Figures hereof. By employing a plastic material, it is possible to provide an overlay having resilient jaw parts to permit the overlay to be easily clipped onto a rod. However, the overlays of the present invention can be made of materials other than plastics, if desired, and can be made from steel, aluminum, or other metals. The principal factors influencing material selection include costs, ease of assembly and replacement, compatibility with the materials carried by the conveyor belt, and the environmental conditions to which the conveyor belt is subjected. Although metals can be used to form the overlays of the present invention, plastics are preferred because of the relatively light weight of such materials, the ease of manufacture (such as injection molding) resulting in lowering manufacturing costs, the ability to provide the overlays in virtually any shape desired, the resistance to corrosion, and the ability to incorporate suitable additives to provide the desired lubricity, anti-static properties, heat conduction properties, moisture absortivity, bioresistence, and the like. Examples of suitable plastics include, but are not limited to, polyolefins, polyamides, polyesters, polycarbonates, acrylics, polyurethanes, and phenolics.

It is understood that the disclosed apparatus is merely illustrative of the principles of the present invention. Other advantages of the overlays of the invention will be readily apparent to those skilled in the art. The overlays are simple and inexpensive to manufacture, and would be made of any desired strength and size. The overlays are quickly and easily installed without the use of special tools or equipment, and without the use of any additional hardware such as clips and the like. Further, one or more overlays may be quickly replaced, as where one becomes damaged, or where all the overlays from the conveyor belt are worn to the extent that it requires replacement.

It also will be understood that the overlay of this invention may be employed with various belt structures which may be designed to travel straight or curved paths or both. The invention is not restrictive to this specific belt structure shown in the drawings. Accordingly, the scope of the present invention is to be determined in accordance with the appended claims.

## Claims

1. A ware transport overlay (100, 200, 300, 400, 500, 600, 700) for use on a conveyor belt (10) having a plurality of spaced transverse rods (14), said overlay comprising an elongated zig-zag member (102,104,504,604) forming alternating oppositely opening nestable segments to allow, in use, collapse thereof in a direction generally perpendicular to rods on a belt with similar zig-zag members of overlays immediately ahead and behind said overlay on said belt, said zig-zag member having a lower surface; and characterised in that a plurality of downwardly opening snap-on retaining devices (106 or 108) is provided on said lower surface and configured to snap said overlay releasably in a vertically downward direction, in use, onto said rods of said conveyor belt along each end of the overlay so as to retain said zig-zag member releasably thereto and to orient said zig-zag member substantially longitudinally relative to said rods, a plurality of one group of said snap-on retaining devices (106) being located in lateral alignment along one end of said overlay to releasably retain a first rod, and a plurality of another group of said snap-on retaining devices (108) being oblong and located in lateral alignment along an opposite end of said overlay to releasably retain a second rod.

2. The ware transport overlay for use on a conveyor belt of claim 1, wherein said zig-zag member comprises a plurality of laterally spaced substantially longitudinally disposed longitudinal members (102) relative to the direction of travel of said belt and a plurality of transversely disposed connecting means (104, 504, 604) relative to the direction of travel of said belt, each of said connecting means connecting adjacent ones of said longitudinal members, adjacent ones of said connecting means connecting opposite end portions of said longitudinal members so that the longitudinal members and connecting means form a plurality of said alternating oppositely nestable segments to allow nesting thereof with similar zig-zag members of overlays immediately ahead and behind said overlay on said belt.

3. The ware transport overlay for use on a conveyor belt of claim 2, further comprising reinforcing means (250) located within each of said segments between each corresponding pair of connected longitudinal members (102) for inhibiting compression or expansion of said overlay in a direction parallel to said rods (14).

4. The ware transport overlay for use on a conveyor belt of claim 3, wherein each of said reinforcing means is a reinforcing member (250), the ends of said reinforcing member being connected to opposing sides of said pair of connected longitudinal members (102) of the respective segment at a point intermediate of the ends of said pair of connected longitudinal members.

5. The ware transport overlay for use on a conveyor belt of claim 3, wherein each of said reinforcing means comprises a reinforcing member (250) connecting and integral to said connecting means and to opposing sides of said pair of connected longitudinal members adjacent to said connecting means, said reinforcing member being a solid mass.

6. The ware transport overlay for use on a conveyor belt of any of claims 1 to 5, wherein each of said connecting means comprises a direct connection (104) of the opposing end portions of two longitudinal members (102) wherein the segments formed thereby are angular in shape.

7. The ware transport overlay for use on a conveyor belt of any of claims 1 to 5, wherein each of said connecting means comprises a connecting member (504, 604) connected to and interposed between the opposing end portions of two longitudinal members.

8. The ware transport overlay for use on a conveyor belt of any of claims 1 to 7, wherein each of said plurality of downwardly opening snap-on retaining devices comprises a plurality of first jaw means (116) for releasably retaining a first rod.

9. The ware transport overlay for use on a conveyor belt of claim 8, wherein each of said plurality of first jaw means comprises at least one first jaw member (116) and at least one second jaw member (116).

10. The ware transport overlay for use on a conveyor belt of claim 9, wherein each of said plurality of first jaw means is associated with and corresponds to a first plurality of said segments.

11. The ware transport overlay for use on a conveyor belt of claim 10 wherein in each of said first plurality of said segments a first jaw member (116) and a second jaw member (116) is integral to each of said pair of connected longitudinal members (102) and extend toward each other and define a first mouth (112) into a corresponding one of said retaining devices.

12. The ware transport overlay for use on a conveyor belt of claim 4, wherein each of said plurality of downwardly opening snap-on retaining devices (106 or 108) comprises a plurality of first jaw means (116) for releasably retaining a first rod, wherein each of said plurality of first jaw means comprises at least one first jaw member (116a) and at least one second jaw member (116b), wherein each of said plurality of first jaw means is associated with and corresponds to a first plurality of said segments, and wherein in each of said first plurality of said segments said at least one first jaw member (116a) is attached to said connecting means and extends toward said reinforcing member and said at least one second jaw member (116b) is attached to said reinforcing member and extends toward said connecting means.

13. The ware transport overlay for use on a conveyor belt in claim 12, wherein each of said at least one first jaw member (116a) and a corresponding one of said at least one second jaw member (116b) extend toward each other and define a first mouth (112) into a corresponding one of said retaining devices.

14. The ware transport overlay for use on a conveyor belt of any of claims 8 to 13, wherein each of said plurality of downwardly opening snap-on retaining devices (106 or 108) further comprises a plurality of second jaw means (124) for releasably retaining a second rod (14).

15. The ware transport overlay for use on a conveyor belt of claim 14, wherein each of said plurality of second jaw means (124) comprises at least one third jaw member (124) and at least one fourth jaw member (124).

16. The ware transport overlay for use on a conveyor belt of claim 15, wherein each of said plurality of second jaw means (124) is associated with and corresponds to a second plurality of said segments.

17. The ware transport overlay for use on a conveyor belt of any of claims 4, 12 or 13 wherein each of said plurality of downwardly opening snap-on retaining devices (106 or 108) further comprises a plurality of second jaw means (124) for releasably retaining a second rod, wherein each of said plurality of second jaw means comprises at least one third jaw member (124a) and at least one fourth jaw member (124b), wherein each of said plurality of second jaw means is associated with and corresponds to a second plurality of said segments, and wherein in each of said second plurality of said segments said at least one third jaw member (124a) is attached to said connecting means and extends towards said reinforcing member and said at least one fourth jaw member (124b) is attached to said reinforcing member and extends toward said connecting means.

18. The ware transport overlay for use on a conveyor belt of claim 17, wherein each of said at least one third jaw member (124a) and a corresponding one of said at least one fourth jaw member (124b) extend toward each other and define a second mouth (122) into a corresponding one of said retaining devices.

19. The ware transport overlay for use on a conveyor belt of claim 18, wherein in each of said second plurality of said segments a third jaw member (124a) and a fourth jaw member (124b) is integral to each of said pair of connected longitudinal members and extend toward each other and define a second mouth (122) into a corresponding one of said retaining devices.

20. A ware transport overlay for use on a conveyor belt of any of claims 2 to 19 wherein each of said snap-on retaining devices in one group of snap-on retaining devices (106) includes openings (110) extending longitudinally of their respective longitudinal member (102) so as to allow the belt to expand or collapse while the belt travels through an arcuate path in the plane of the belt.

21. A ware transport overlay for use on a conveyor belt of claim 20 wherein a second group of snap-on retaining devices (108) includes openings (120) extending longitudinally of their respective longitudinal member (102).

22. A ware transport overlay for use on a conveyor belt of any of claims 2 to 19 wherein each of said snap-on retaining devices in one group of snap-on retaining devices (106) includes a generally circular opening (110) and each of said snap-on retaining devices in a second group of snap-on retaining devices (108) includes opening (120) extending longitudinally of their respective longitudinal member (102) so as to allow the belt to expand or collapse while the belt travels through an arcuate path in the plane of the belt.

23. A conveyor system having at least one ware transport section made up of a succession of overlays for transporting articles, each overlay providing an upper overlay surface upon which said articles are supported, wherein each overlay is formed in accordance with any preceding claim and is supported and moved along by a belt of spaced rod members extending transversely of the direction of travel of said belt.

24. The ware transport overlay of claim 14 wherin the first or the second jaw means (116, 124) is spaced inward from an expanded position of the rods in a tractive position of the belt wherein the rods are connected to the overlay in a collapsed position of the belt.

25. The ware transport overlay of claim 14 wherein both the first and second jaw means (116, 124) are spaced inward from an expanded position of the rods in a tractive position of the belt wherein the rods are connected to the overlay in a collapsed position of the belt.

## Patentansprüche

1. Warentransportauflage (100, 200, 300, 400, 500, 600, 700) zur Verwendung auf einem Transportband (10) mit einer Mehrzahl beabstandeter, transversaler Stangen (14), wobei die Auflage ein langgestrecktes Zick-Zack-Element (102, 104, 504, 604) aufweist, das abwechselnd entgegengesetzt ineinander greifbare Segmente für ein Zusammenfalten dieser Elemente in eine Richtung im Betrieb bildet, die im wesentlichen senkrecht zu Stangen auf einem Band mit ähnlichen Auflage-Zick-Zack-Elementen unmittelbar vor und hinter der Auflage auf dem Band ist, wobei die Zick-Zack-Elemente eine untere Oberfläche haben, dadurch gekennzeichnet, daß eine Mehrzahl sich nach unten öffnender Aufschnapp-Rückhaltemittel (106 oder 108) auf der unterer Oberfläche derart vorgesehen sind, daß sie im Betrieb die Auflage lösbar vertikal abwärts auf die Stangen auf dem Transportband auf jeder Seite der Auflage zum lösbaren Halten der Zick-Zack-Elemente auf dieser und zum Anordnen der Zick-Zack-Elemente im wesentlichen longitudinal zu den Stangen aufzuschnappen, wobei eine Mehrzahl einer Gruppe der Aufschnapp-Rückhaltemittel (106) lateral entlang einem Ende der Auflage angeordnet ist, um eine erste Stange lösbar zu halten, und wobei eine Mehrzahl einer anderen Gruppe der Aufschnapp-Rückhaltemitteln (108) länglich ausgebildet und lateral entlang einem gegenüberliegenden Ende der Auflage zum lösbaren halten einer zweiten Stange angeordnet ist.

2. Warentransportauflage zur Verwendung auf einem Transportband nach Anspruch 1, wobei das Zick-Zack-Element eine Mehrzahl lateral beabstandeter, relativ zur Transportrichtung des Bandes im wesentlichen longitudinal angeordneter Longitudinalelemente (102) und eine Mehrzahl relativ zur Transportrichtung des Bandes transversal angeordneter Verbindungs-Vorrichtungen (104, 504, 604) aufweist, wobei jedes der Verbindungs-Vorrichtungen benachbarte Longitudinalelemente verbindet, wobei benachbarte Verbindungs-Vorrichtungen gegenüberliegende Enden der Longitudinalelemente derart verbindet, daß die longitudinalen Elemente und die Verbindungs-Vorrichtungen eine Mehrzahl der abwechselnd entgegengesetzt ineinander greifbarer Segmente für ein Ineinandergreifen dieser mit ähnlichen Auflage-Zick-Zack-Elementen unmittelbar vor und hinter der Auflage auf dem Band ermöglichen.

3. Warentransportauflage zur Verwendung auf einem Transportband nach Anspruch 2, weiterhin mit Verstärkungs-Vorrichtungen (250), die in jedem der Segmente zwischen jedem entsprechenden Paar verbundener Longitudinalelemente (102) zum Verhindern eines Zusaffmenpressens oder Ausdehnens der Auflage in Richtung parallel zu den Stangen (14) angeordnet sind.

4. Warentransportauflage zur Verwendung auf einem Transportband nach Anspruch 3, wobei jedes der Verstärkungs-Vorrichtungen ein Verstärkungselement (250) ist, wobei die Enden der Verstärkungselemente mit gegenüberliegenden Seiten der Paare von verbundenen Longitudinalelementen (102) des jeweiligen Segments an einem Punkt zwischen den Enden des Paares von verbundenen Longitudinalelementen verbunden ist.

5. Warentransportauflage zur Verwendung auf einem Transportband nach Anspruch 3, wobei jedes der Verstärkungs-Vorrichtungen ein Verstärkungselement (250) aufweist, das verbindend und integral mit den Verbindungs-Vorrichtungen und mit gegenüberliegenden Seiten des Paares von verbundenen Longitudinalelementen, die benachbart zu den Verbindungsvorrichtungen sind, ausgebildet ist, wobei das Verstärkungselement eine feste Masse ist.

6. Warentransportauflage zur Verwendung auf einem Transportband nach einem der Ansprüche 1 bis 5, wobei jedes der Verbindungs-Vorrichtungen eine Direktverbindung (104) der gegenüberliegenden Endbereiche von zwei Longitudinalelementen (102) aufweist, wobei das so ausgebildete Segment winkelförmig ist.

7. Warentransportauftage zur Verwendung auf einem Transportband nach einem der Ansprüche 1 bis 5, wobei jedes der Verbindungs-Vorrichtungen ein Verbindungselement (504, 604) aufweist, das mit den gegenüberliegenden Endbereichen von zwei Longitudinalelementen verbunden und zwischen diesen angeordnet ist.

8. Warentransportauflage zur Verwendung auf einem Transportband nach einem der Ansprüche 1 bis 7, wobei jedes der Mehrzahl von sich nach unten öffnenden Aufschnapp-Rückhaltemittel eine Mehrzahl von ersten Klemm-Mitteln (116) zur lösbaren Halterung von einer ersten Stange aufweist.

9. Warentransportauflage zur Verwendung auf einem Transportband nach Anspruch 8, wobei jedes der Mehrzahl von ersten Klemm-Mitteln wenigsten ein erstes Klemmelement (116) und wenigstens ein zweites Klemm-Mittel (116) aufweist.

10. Warentransportauftage zur Verwendung auf einem Transportband nach Anspruch 9, wobei jedes der Mehrzahl von ersten Klemm-Mitteln mit einer ersten Mehrzahl der Segmente korrespondiert und dieser zugeordnet ist.

11. Warentransportauftage zur Verwendung auf einem Transportband nach Anspruch 10, wobei in jedem der ersten Mehrzahl von Segmenten ein erstes Klemmelement (116) und ein zweites Klemmelement (116) einstückig zu jedem der Paare von verbundenen Longitudinalelementen (102) ausgebildet ist und sich aufeinander zu erstrecken und ein erstes Maul (112) in einem der entsprechenden Rückhaltemittel bilden.

12. Warentransportauflage zur Verwendung auf einem Transportband nach Anspruch 4, wobei jedes der Mehrzahl von sich abwärts öffnenden Aufschnapp-Rückhaltemittel (106 oder 108) eine Mehrzahl von ersten Klemm-Mitteln (116) zur lösbaren Halterung einer ersten Stange aufweist, wobei jedes der Mehrzahl von ersten Klemm-Mitteln wenigstens ein erstes Klemmelement (116a) und wenigstens ein zweites Klemmelement (116b) aufweist, wobei jedes der Mehrzahl von ersten Klemm-Mitteln mit einer ersten Mehrzahl von den Segmenten korrespondiert und diesen zugeordnet ist, und wobei in jedem der ersten Mehrzahl von den Segmenten das wenigstens ein erstes Klemmelement (116a) an der Verbindungs-Vorrichtung befestigt ist und sich in Richtung des Verstärkungselements erstreckt und wobei das wenigstens ein zweites Klemmelement (116b) an dem Verstärkungselement befestigt ist und sich in Richtung der Verbindungsvorrichtung erstreckt.

13. Warentransportauflage zur Verwendung auf einem Transportband nach Anspruch 12, wobei jedes von wenigstens einem ersten Klemmelement (116a) und ein entsprechendes von wenigstens einem zweiten Klemmelement (116b) sich aufeinander zu erstrecken und ein erstes Maul (112) in einem der entsprechenden Rückhaltemittel bilden.

14. Warentransportauflage zur Verwendung auf einem Transportband nach einem der Ansprüche 8 bis 13, wobei jedes der Mehrzahl der sich abwärts öffnenden Aufschnapp-Rückhaltemittel (106 oder 108) weiterhin eine Mehrzahl von zweiten Klemm-Mitteln (124) zur lösbaren Halterung einer zweiten Stange (14) aufweist.

15. Warentransportauflage zur Verwendung auf einem Transportband nach Anspruch 14, wobei jedes der Mehrzahl von zweiten Klemm-Mitteln (124) wenigstens ein drittes Klemmelement (124) und wenigstens ein viertes Klemmelement (124) aufweist.

16. Warentransportauflage zur Verwendung auf einem Transportband nach Anspruch 15, wobei jedes der Mehrzahl von zweiten Klemm-Mitteln (124) mit einer zweiten Mehrzahl von den Segmenten korrespondiert und diesen zugeordnet ist.

17. Warentransportauflage zur Verwendung auf einem Transportband nach einem der Ansprüche 4, 12 oder 13, wobei jedes der Mehrzahl von sich abwärts öffnenden Aufschnapp-Rückhaltemitteln (106 oder 108) weiterhin eine Mehrzahl von zweiten Klemm-Mitteln (124) zur lösbaren Halterung einer zweiten Stange aufweist, wobei jedes der Mehrzahl von zweiten Klemm-Mitteln wenigstens ein drittes Klemmelement (124a) und wenigstens ein viertes Klemmelement (124b) aufweist, wobei jedes der Mehrzahl von zweiten Klemm-Mitteln mit einer zweiten Mehrzahl von den Segmenten korrespondiert und diesen zugeordnet ist, und wobei in jedem der zweiten Mehrzahl von den Segmenten das wenigstens ein erstes Klemmelement (124a) an der Verbindungs-Vorrichtung befestigt ist und sich in Richtung des Verstärkungselements erstreckt, und wobei wenigstens ein viertes Klemmelement (124b) an dem Verstärkungselement befestigt ist und sich in Richtung der Verbindungsvorrichtung erstreckt.

18. Warentransportauflage zur Verwendung auf einem Transportband nach Anspruch 17, wobei jedes von wenigstens einem dritten Klemmelement (124a) und ein entsprechendes von wenigstens einem vierten Klemmelement (124b) sich aufeinander zu erstrecken und ein zweites Maul (122) in einem der entsprechenden Rückhaltemittel bilden.

19. Warentransportauflage zur Verwendung auf einem Transportband nach Anspruch 18, wobei in jedem der zweiten Mehrzahl von Segmenten ein drittes Klemmelement (124a) und ein viertes Klemmelement (124b) einstückig zu jedem der Paare von verbundenen Longitudinalelementen ausgebildet ist und sich aufeinander zu erstrecken und ein zweites Maul (122) in einem der entsprechenden Rückhaltemittel bilden.

20. Warentransportauflage zur Verwendung auf einem Transportband nach einem der Ansprüche 2 bis 19, wobei jedes der Aufschnapp-Rückhaltemittel in einer Gruppe von Aufschnapp-Rückhaltemitteln (106) Öffnungen (110) aufweist, die sich longitudinal von ihrem jeweiligen Longitudinalelement (102) aus für ein Ausdehnen oder zusammenfalten des Bandes in seiner Ebene bei der Bewegung um eine bogenförmige Strecke bzw. um eine Kurve herum erstrecken.

21. Warentransportauflage zur Verwendung auf einem Transportband nach Anspruch 20, wobei eine zweite Gruppe von Aufschnapp-Rückhaltemitteln (108) Öffnungen (120) aufweist, die sich longitudinal von ihrem jeweiligem Longitudinalelement (102) aus erstrecken.

22. Warentransportauflage zur Verwendung auf einem Transportband nach einem der Ansprüche 2 bis 19, wobei jedes der Aufschnapp-Rückhaltemittel in einer Gruppe von Aufschnapp-Rückhaltemitteln (106) im wesentlichen eine kreisförmige Öffnung (110) aufweist und jedes der Aufschnapp-Rückhaltemittel in einer zweiten Gruppe von Aufschnapp-Rückhaltemitteln (108) Öffnungen (120) aufweist, die sich longitudinal von ihrem jeweiligem Longitudinalelement (102) aus für ein Ausdehnen oder Zusammenziehen des Bandes in seiner Ebene bei der Bewegung um eine bogenförmige Strecke bzw. um eine Kurve herum erstrecken.

23. Transportsystem mit wenigstens einem Warentransportabschnitt aus aufeinanderfolgenden Auflagen zum Transport von Gegenständen, wobei jede Auflage eine obere Auflagefläche hat, auf der die Gegenstände liegen, wobei jede Auflage nach einem der vorstehenden Ansprüche ausgebildet ist und mittels eines Bandes aus beabstandeten Stangenelementen, die sich transversal der Transportrichtung des Bandes erstrecken, gehalten und längsbewegbar ist.

24. Die Warentransportauflage nach Anspruch 14, wobei in einer Zugstellung des Bandes von einer auseinandergezogenen Stellung der Stangen nach innen beabstandet ist, wobei die Stangen mit der Auflage in einer zusammengefalteten Stellung verbunden sind.

25. Warentransportauflage nach Anspruch 14, wobei sowohl das erste und als auch das zweite Klemm-Mittel (116, 124) in einer Zugstellung des Bandes von einer auseinandergezogenen Stellung der Stangen nach innen beabstandet sind, wobei die Stangen mit der Auflage in einer zusammengefalteten Stellung verbunden sind.

## Revendications

1. Matelas de transport de marchandises (100, 200, 300, 400, 500, 600, 700) destiné à être utilisé sur une courroie de convoyeur (10) comportant une pluralité de tiges transversales espacées (14), ce matelas comprenant un élément en zigzag allongé (102, 104, 504, 604) formant des segments emboîtables s'ouvrant alternativement des deux côtés opposés pour qu'on puisse, en cours d'utilisation, les tasser dans une direction généralement perpendiculaire aux tiges sur une courroie comportant des éléments de matelas en zigzag analogues placés juste devant et juste derrière le matelas sur la courroie, cet élément en zigzag comportant une surface inférieure, caractérisé en ce qu'une pluralité de dispositifs de retenue par enclenchement s'ouvrant vers le bas (106 ou 108) sont prévus sur la surface inférieure et configurés pour enclencher le matelas de manière amovible dans une direction dirigée verticalement vers le bas, en cours d'utilisation, sur les tiges de la courroie de convoyeur le long de chaque extrémité du matelas, afin de retenir l'élément en zigzag de manière amovible sur les tiges et à orienter cet élément en zigzag essentiellement longitudinalement par rapport aux tiges, une pluralité de dispositifs de retenue par enclenchement (106) d'un groupe étant placés en alignement latéral le long d'une extrémité du matelas pour maintenir de manière amovible une première tige, et une pluralité de dispositifs de retenue par enclenchement (108) étant oblongs et placés en alignement latéral le long d'une extrémité opposée du matelas, pour retenir une seconde tige de manière amovible.

2. Matelas de transport de marchandises destiné à être utilisé sur une courroie de convoyeur selon la revendication 1, dans lequel l'élément en zigzag comprend une pluralité d'éléments longitudinaux (102) espacés latéralement et disposés essentiellement longitudinalement par rapport à la direction d'avancement de la courroie, et une pluralité de moyens de liaison (104, 505, 604) disposés transversalement par rapport à la direction d'avancement de la courroie, chacun des moyens de liaison reliant les éléments longitudinaux adjacents, les moyens de liaison adjacents reliant les parties d'extrémités opposées des éléments longitudinaux de façon que ces éléments longitudinaux et les moyens de liaison forment une pluralité de segments emboîtables alternativement opposés pour permettre l'emboîtement de ceux-ci avec des éléments en zigzag analogues de matelas placés juste en avant et juste en arrière de ce matelas sur la courroie.

3. Matelas de transport de marchandises destiné à être utilisé sur une courroie de convoyeur selon la revendication 2, comprenant en outre des moyens de renforcement (250) placés à l'intérieur de chacun des segments entre chaque paire correspondante d'éléments longitudinaux reliés (102), pour empêcher la compression ou la dilatation de ce matelas dans une direction parallèle aux tiges (14).

4. Matelas de transport de marchandises destiné à être utilisé sur une courroie de convoyeur selon la revendication 3, dans lequel chacun des moyens de renforcement est un élément de renforcement (250), les extrémités de cet élément de renforcement étant reliées aux côtés opposés de la paire d'éléments longitudinaux reliés (102) du segment respectif à l'endroit d'un point intermédiaire entre les extrémités de cette paire d'éléments longitudinaux reliés.

5. Matelas de transport de marchandises destiné à être utilisé sur une courroie de convoyeur selon la revendication 3, dans lequel chacun des moyens de renforcement comprend un élément de renforcement (250) reliant d'un seul tenant les moyens de liaison avec les côtés opposés de la paire d'éléments longitudinaux reliés qui sont adjacents aux moyens de liaison, cet élément de renforcement étant une masse pleine.

6. Matelas de transport de marchandises destiné à être utilisé sur une courroie de convoyeur selon l'une quelconque des revendications 1 à 5, dans lequel chacun des moyens de liaison comprend une liaison directe (104) des parties d'extrémités opposées de deux éléments longitudinaux (102) dans lesquels les segments ainsi formés sont de forme coudée.

7. Matelas de transport de marchandises destiné à être utilisé sur une courroie de convoyeur selon l'une quelconque des revendications 1 à 5, dans lequel chacun des moyens de liaison comprend un élément de liaison (504, 604) relié et interposé entre les parties d'extrémités opposées de deux éléments longitudinaux.

8. Matelas de transport de marchandises destiné à être utilisé sur une courroie de convoyeur selon l'une quelconque des revendications 1 à 7, dans lequel chacun de la pluralité de dispositifs de retenue par enclenchement s'ouvrant vers le bas comprend une pluralité de premiers moyens de mâchoires (116) pour retenir une première tige de manière amovible.

9. Matelas de transport de marchandises destiné à être utilisé sur une courroie de convoyeur selon la revendication 8, dans lequel chacun de la pluralité de premiers moyens de mâchoires comprend au moins un premier élément de mâchoire (116) et au moins un second élément de mâchoire (116).

10. Matelas de transport de marchandises destiné à être utilisé sur une courroie de convoyeur selon la revendication 9, dans lequel chacun de la pluralité de premiers moyens de mâchoires est associé à une première pluralité de ces segments et correspond à ceux-ci.

11. Matelas de transport de marchandises destiné à être utilisé sur une courroie de convoyeur selon la revendication 10, dans lequel, dans chacun de la première pluralité de segments, un premier élément de mâchoire (116) et un second élément de mâchoire (116) font corps avec chaque paire d'éléments longitudinaux reliés (102) et s'étendent l'un vers l'autre en définissant une première embouchure (112) dans l'un correspondant des dispositifs de retenue.

12. Matelas de transport de marchandises destiné à être utilisé sur une courroie de convoyeur selon la revendication 4, dans lequel chacun de la pluralité de dispositifs de retenue par enclenchement s'ouvrant vers le bas (106 ou 108) comprend une pluralité de premiers moyens de mâchoires (116) pour retenir de manière amovible une première tige, dans lequel chacun de la pluralité de premiers moyens de mâchoires comprend au moins un premier élément de mâchoire (116a) et au moins un second élément de mâchoire (116b), dans lequel chacun de la pluralité de premiers moyens de mâchoires est associé et correspond à une première pluralité de segments, et dans lequel, dans chacun de la première pluralité de segments, au moins un premier élément de mâchoire (116a) est fixé au moyen de liaison et s'étend vers l'élément de renforcement, tandis qu'au moins un second élément de mâchoire (116b) est fixé à l'élément de renforcement et s'étend vers le moyen de liaison.

13. Matelas de transport de marchandises destiné à être utilisé sur une courroie de convoyeur selon la revendication 12, dans lequel chacun d'au moins un premier élément de mâchoire (116a) et l'un correspondant d'au moins un second élément de mâchoire (116b), s'étendent l'un vers l'autre et définissent une première embouchure (112) dans l'un, correspondant, des dispositifs de retenue.

14. Matelas de transport de marchandises destiné à être utilisé sur une courroie de convoyeur selon l'une quelconque des revendications 8 à 13, dans lequel chacun' de la pluralité de dispositifs de retenue par enclenchement s'ouvrant vers le bas (106 ou 108) comprend en outre une pluralité de seconds moyens de mâchoires (124) pour retenir de manière amovible une seconde tige (14).

15. Matelas de transport de marchandises destiné à être utilisé sur une courroie de convoyeur selon la revendications 14, dans lequel chacun de la pluralité de seconds moyens de mâchoires (124) comprend au moins un troisième élément de mâchoire (124) et au moins un quatrième élément de mâchoire (124).

16. Matelas de transport de marchandises destiné à être utilisé sur une courroie de convoyeur selon la revendication 15, dans lequel chacun de la pluralité de seconds moyens de mâchoires (124) est associé et correspond à une seconde pluralité de ces segments.

17. Matelas de transport de marchandises destiné à être utilisé sur une courroie de convoyeur selon l'une quelconque des revendications 4, 12 ou 13, dans lequel chacun de la pluralité de dispositifs de retenue par enclenchement s'ouvrant vers le bas (106 ou 108) comprend en outre une pluralité de seconds moyens de mâchoires (124) pour retenir de manière amovible une seconde tige, dans lequel chacun de la pluralité de seconds moyens de mâchoires comprend au moins un troisième élément de mâchoire (124a) et au moins un quatrième élément de mâchoire (124b), dans lequel chacun de la pluralité de seconds moyens de mâchoires est associé et correspond à une seconde pluralité de ces segments, et dans lequel, dans chacun de la seconde pluralité des segments, au moins un troisième élément de mâchoire (124a) est fixé au moyen de liaison et s'étend vers l'élément de renforcement, tandis qu'au moins un quatrième élément de mâchoire (124b) est fixé à l'élément de renforcement et s'étend vers le moyen de liaison.

18. Matelas de transport de marchandises destiné à être utilisé sur une courroie de convoyeur selon la revendication 17, dans lequel chacun d'au moins un troisième élément de mâchoire (124a) et l'un correspondant d'au moins un quatrième élément de mâchoire (124b) s'étendent l'un vers l'autre et définissent une seconde embouchure (122) dans l'un, correspondant, des dispositifs de retenue.

19. Matelas de transport de marchandises destiné à être utilisé sur une courroie de convoyeur selon la revendication 18, dans lequel, dans chacun de la seconde pluralité de segments, un troisième élément de mâchoire (124a) et un quatrième élément de mâchoire (124b) font corps avec chaque paire d'éléments longitudinaux reliés et s'étendent l'un vers l'autre en définissant une seconde embouchure (122) dans l'un, correspondant, des dispositifs de retenue.

20. Matelas de transport de marchandises destiné à être utilisé sur une courroie de convoyeur selon l'une quelconque des revendications 2 à 19, dans lequel chacun des dispositifs de retenue par enclenchement d'un groupe de dispositifs de retenue par enclenchement (106) comprend des ouvertures (110) s'étendant dans le sens longitudinal de leur élément longitudinal respectif (102), de manière à permettre à la courroie de se dilater ou de se tasser tandis qu'elle passe par un chemin courbe dans le plan de cette courroie.

21. Matelas de transport de marchandises destiné à être utilisé sur une courroie de convoyeur selon la revendication 20, dans lequel un second groupe de dispositifs de retenue par enclenchement (108) comprend des ouvertures (120) s'étendant dans le sens longitudinal de leur élément longitudinal respectif (102).

22. Matelas de transport de marchandises destiné à être utilisé sur une courroie de convoyeur selon l'une quelconque des revendications 2 à 19, dans lequel chacun des dispositifs de retenue par enclenchement dans un groupe de dispositifs de retenue par enclenchement (106) comprend une ouverture généralement circulaire (110), et chacun des dispositifs de retenue par enclenchement dans un second groupe de dispositifs de retenue par enclenchement (108) comprend une ouverture (120) s'étendant dans le sens longitudinal de leur élément longitudinal respectif (102), de manière à permettre à la courroie de se dilater ou de se tasser pendant qu'elle passe par un chemin courbe dans le plan de cette courroie.

23. Système de convoyeur comportant au moins une section de transport de marchandises constituée d'une succession de matelas de transport d'articles, chaque matelas fournissant une surface de matelas supérieure sur laquelle les articles sont supportés, dans lequel chaque matelas est réalisé selon l'une quelconque des revendications précédentes, et se trouve supporté et entraîné par une courroie d'éléments de tige espacés s'étendant transversalement par rapport à la direction de passage de la courroie.

24. Matelas de transport de marchandises selon la revendication 14, dans lequel le premier ou le second moyen de mâchoire (116, 124) est espacé vers l'intérieur pour passer d'une position dilatée des tiges à une position de traction de la courroie dans laquelle les tiges sont reliées au matelas dans une position tassée de la courroie.

25. Matelas de transport de marchandises selon la revendication 14, dans lequel à la fois le premier moyen de mâchoire et le second moyen de mâchoire (116, 124) sont espacés vers l'intérieur pour passer d'une position dilatée des tiges à une position de traction de la courroie dans laquelle les tiges sont reliées au matelas dans une position tassée de la courroie.
